# EUROPÄISCHE PATENTSCHRIFT

(11) **EP 0 970 743 B1**
(45) Veröffentlichungstag und Bekanntmachung des Hinweises auf die Patenterteilung: **20.08.2003**
(21) Anmeldenummer: 99810494.7
(22) Anmeldetag: 07.06.1999
(51) Int. Cl.: B01F 15/00, B29B 7/48

(54) **Misch- und Knetmaschine**
Mixing and kneading machine
Machine pour mélanger et malaxer

(30) Priorität: 10.07.1998 CH 148198
(43) Veröffentlichungstag der Anmeldung: 12.01.2000
(73) Patentinhaber: Coperion Buss AG, 4133 Pratteln 1 (CH)
(72) Erfinder: Tschopp, Patrick, 4133 Pratteln (CH)
(74) Vertreter: Rottmann, Maximilian R.

(56) Entgegenhaltungen:
- EP-A- 0 828 072
- DE-A- 2 440 079
- US-A- 3 284 067
- PATENT ABSTRACTS OF JAPAN vol. 008, no. 241 (C-250), 6. November 1984 (1984-11-06) & JP 59 123522 A (SHINAGAWA KOGYOSHO:KK), 17. Juli 1984 (1984-07-17)

## Beschreibung

Die Erfindung betrifft eine Misch- und Knetmaschine mit einem in einem Gehäuse rotierenden und sich translatorisch bewegenden Arbeitsorgan zum Mischen und Kneten von in einem Arbeitsraum aufgenommenen Materialien.

Misch- und Knetmaschinen der genannten Art werden beispielsweise zum Verarbeiten von zähplastischen Massen, zum Homogenisieren und Plastifizieren von Kunststoffen sowie zum Einarbeiten von Füll- und Verstärkungsstoffen eingesetzt.

Die Schwierigkeit bei einem rotierenden und sich gleichzeitig hin- und herbewegenden Arbeitsorgan besteht darin, dass dieses kaum langzeitstabil abgedichtet werden kann. Durch die beiden einander überlagerten Bewegungen kann es zudem zu einem Taumeln des Arbeitsorgans kommen, was die Abdichtung zusätzlich erschwert.

Zum Abdichten solcher Arbeitsorgane wurden bis anhin im allgemeinen elastische Dichtungen verwendet, welche sowohl radiale Auslenkungen wie auch relative Längsverschiebungen des Arbeitsorgans aufnehmen können. Allerdings hat sich gezeigt, dass die Lebensdauer solcher Dichtungen sehr beschränkt ist.

Aus der US 3 284 067 ist ein Flüssigkeitsverteilapparat bekannt, der mit einer rotierenden Welle versehen ist. Die Welle ist innerhalb eines zylindrischen Gehäuses zentrisch frei beweglich an einem als Kugelgelenk ausgebildeten Lagerkörper aufgehängt. Der Lagerkörper lässt Pendelbewegungen jedoch keine translatorischen Bewegungen der Welle zu. Zum Abdichten der Welle gegenüber dem Gehäuse ist eine zweiteilige Dichtungsanordnung vorgesehen, die mit dem Lagerkörper verbunden ist. Die Dichtungsanordnung verfügt über eine Stopfbüchsenpackung die dichtend an der Welle anliegt sowie einen zwischen der Stopfbüchsenpackung und dem Gehäuse angeordneten Faltenbalg, welcher gleichzeitig auch als Verdrehsicherung der Dichtungsanordnung dient. Der Faltenbag kann Pendelwewegungen der Welle aufnehmen.

Aus der DE 24 40 079 A1 ist eine Mischvorrichtung mit einem Kessel und einem in den Kessel hineinreichenden Rührorgan bekannt. Das Rührorgan besteht aus einer Rührwelle, an deren Ende Rührschaufeln angeordnet sind. Die Rührwelle ist bezüglich der Achsenlinie des Kessels exzentrisch gelagert. Die Welle wird mittels eines Elektromotors mit zwischengeschaltetem Sonnenrad und Planetengetriebe derart angetrieben, dass sie eine geschlossene Bahn beschreibt. Zum Abdichten des Kessels gegenüber der Atmosphäre ist ein aus einem biegsamen Material gebildetes Abdichtungsblatt vorgesehen, das fest mit der Kesselwand und der Welle verbunden ist.

Aus dem Dokument Patent Abstracts of Japan 59 123 522 geht eine sanitäre Kneteinrichtung hervor. Diese weist einen Behälter und ein drehbares Rührelement auf. Zum Abdichten des Behälters ist ein Abdichtmechanismus vorgesehen, der mittels einer Schraube an der Welle des Rührelements befestigt wird. Der Abdichtmechanismus besteht aus einem Dichtkörper, der mit einer Bohrung zum Durchführen der Welle versehen ist. Auf der Innenseite des Dichtkörpers ist ein Dichtelement zum Abdichten der Welle gegenüber einem Dichtkörper vorgesehen. Im weitereh ist eine ringförmige Dichtung vorgesehen, die in einer Nut im Dichtkörper aufgenommen ist und deren Stirnseite dichtend am Behälter anliegt.

Schliesslich ist aus der EP 0 828 072 A1 ein Deckel aus Stahlblech für eine rotierende Abdichtung einer Antriebswelle eines Kraftfahrzeugs bekannt. Der Deckel weist eine statische sowie eine dynamische Dichtungseinheit auf. Die zum Abdichten der Antriebswelle vorgesehene dynamische Dichtungseinheit verfügt über zwei Dichtungslippen, wobei die eine Dichtungslippe aus einem Material mit einer niedrigen Reibungszahl gefertigt ist. Die statische und die dynamische Dichtungseinheit sind durch mindestens einen Streifen aus einem elastomeren Material miteinander verbunden.

Es ist daher die Aufgabe der vorliegenden Erfindung, eine Misch- und Knetmaschine mit einem in einem Gehäuse rotierenden und sich translatorisch bewegenden Arbeitsorgan zum Mischen und Kneten von in einem Arbeitsraum aufgenommenen Materialien derart zu verbessern, dass das Arbeitsorgan zuverlässig und langzeitstabil abgedichtet werden kann.

Diese Aufgabe wird durch die im Anspruch 1 angeführten Merkmale gelöst.

Mit einer Dichtungsanordnung, die eine zwischen dem Gehäuse und dem Arbeitsorgan angeordnete Abstützanordnung zur Aufnahme von ersten und zweiten Dichtmitteln umfasst, welche Abstützanordnung drehfest angeordnet jedoch translatorisch mit dem Arbeitsorgan gekoppelt ist, kann die Dichtungsaufgabe zweigeteilt werden, indem die ersten, zum rotativen Abdichten des Arbeitsorgans vorgesehenen Dichtmittel zwischen dem Arbeitsorgan und der Abstützanordnung angeordnet werden und die zweiten, zum translativen Abdichten des Arbeitsorgans vorgesehenen Dichtmittel zwischen der Abstützanordnung und dem Gehäuse angeordnet werden. Durch diese Zweiteilung können die jeweiligen Dichtmittel optimal an ihre Aufgabe angepasst werden.

Bevorzugte Ausführungsformen der Erfindung sind in den abhängigen Ansprüchen 2 bis 18 umschrieben.

So wird bei einem bevorzugten Ausführungsbeispiel vorgeschlagen, dass die zweiten Dichtmittel durch zumindest eine Membran gebildet werden. Durch das Vorsehen einer Membran zwischen dem Gehäuse und der Abstützanordnung wird verhindert, dass die zu verarbeitenden Materialien hinter die Abstützanordnung gelangen und diese zusetzen.

Nachfolgend wird ein bevorzugtes Ausführungsbeispiel der Erfindung anhand einer Zeichnung näher erläutert. In dieser Zeichnung zeigt:
Fig. 1 einen schematischen Längsschnitt durch das Gehäuse und das Arbeitsorgan einer Misch- und Knetmaschine im Bereich der Dichtungsanordnung.
Fig. 2 eine stirnseitige Ansicht der Misch- und Knetmaschine gemäss Fig.1.

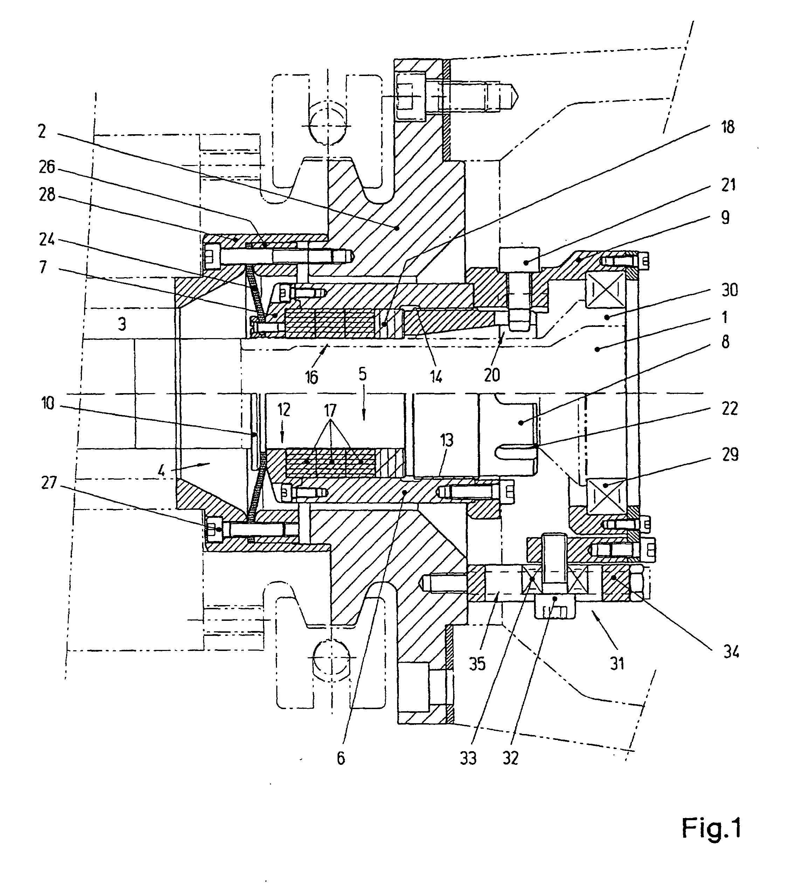

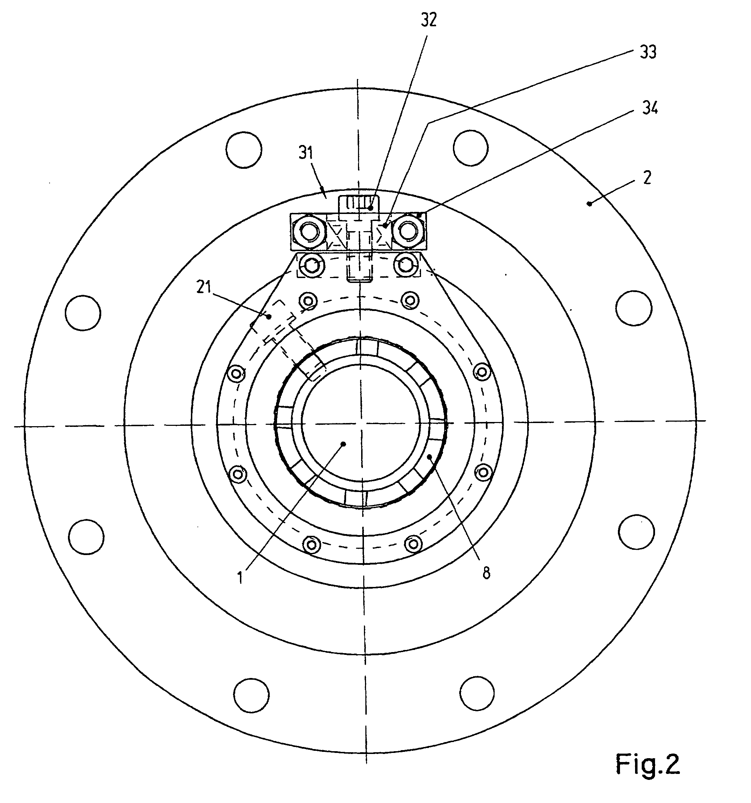

Anhand der Figuren 1 und 2 werden die im Zusammenhang mit der Erfindung wesentlichen Teile der Misch- und Knetmaschine erläutert.

Die Misch- und Knetmaschine besteht im wesentlichen aus einem Arbeitsorgan 1, welches in einem Gehäuse 2 aufgenommen ist. Das Arbeitsorgan 1 ist eine mit Mischflügeln (nicht dargestellt) versehene Rotorwelle, welche im Betrieb neben einer Dreh- auch ein translatorische Bewegung ausführt. Der zum Verarbeiten der Materialien vorgesehene Arbeitsraum ist schematisch angedeutet und mit dem Bezugszeichen 3 versehen. Zum Abdichten des Arbeitsorgans 1 gegenüber dem Gehäuse 2 ist eine Dichtungsanordnung 4 vorgesehen, welche als zentrales Element eine Abstützanordnung 5 aufweist. Die Abstützanordnung 5 besteht aus einer Hülse 6, einem Ringelement 7, einer Spannbüchse 8, einem Stützring 9 sowie einem Spannring 10. Das Ringelement 7 ist endseitig an der Hülse 6 befestigt und überragt diese radial nach innen, so dass ein umlaufender Anschlagbund 12 gebildet wird. Die Hülse 6 ist in dem dem Absatz 12 abgewandten Endbereich mit einem Innengewinde 13 versehen ist, welches mit einem an der Spannbüchse 8 angeordneten Aussengewinde 14 korrespondiert. Zwischen dem Absatz 12 der Hülse 6 und der Stirnseite der Spannbüchse 8 sind die ersten Dichtmittel 16 eingespannt. Diese werden durch mehrere rechteckige Form aufweisende Dichtpackungen 17 gebildet. Zwischen den Dichtpackungen 17 und der Stirnseite der Spannbüchse 8 ist ein Lagerring 18 vorgesehen, dessen Innendurchmesser zumindest annähernd dem Aussendurchmesser des korrespondierenden Abschnitts des Arbeitsorgans 1 entspricht. Dieser Lagerring 18 verhindert einerseits ein relatives Verdrehen der Dichtpackungen 17 gegenüber der Hülse 6. Andererseits dient der Lagerring 18 dem radialen Abstützen der Abstützanordnung 5 an dem Arbeitsorgan 1, indem über den Lagerring 18 das Mitschwimmen der Dichtpackungen 17 auf dem Arbeitsorgan 1 begünstigt wird. Der Lagerring 18 ist vorzugsweise aus einem Kunststoff mit guten selbstschmierenden Eigenschaften gefertigt. Um bei einer allfälligen Leckage im Bereich der ersten Dichtmittel 16 das Entfernen der zu verarbeitenden Materialien aus der Spannbüchse 8 zu begünstigen, vergrössert sich der Innendurchmesser der Spannbüchse 8 nach hinten konisch.

Der Stützring 9 ist mit zumindest einer Gewindebohrung 20 und die Spannbüchse 8 mit länglichen Ausnehmungen 22 versehen, welche in der Lage mit der Gewindebohrung 20 korrespondieren. In die Gewindebohrung 20 ist eine Schraube 21 eingedreht, deren Vorderseite in eine Ausnehmung der Spannbüchse 8 eingreift, und die Spannbüchse 8 gegen Verdrehen sichert. Durch dieses Stopfbüchsen-Prinzip können die Dichtpackungen 17 einfach eingespannt und jederzeit nachgezogen werden. Die längliche Gestaltung der Ausnehmungen 22 ermöglicht dabei eine axiale Verschiebung der Spannbüchse 8 in Relation zur Schraube 21. Durch die über die Spannbüchse 8 auf die Dichtpackungen 17 ausgeübte Einspannkraft kann zudem die radiale Verformung der Dichtpackungen 17 und damit die auf das Arbeitsorgan 1 ausgeübte Dichtkraft variiert werden.

Die Abstützanordung 5 ist mittels des Stützrings 9 an einem am Arbeitsorgan 1 angeordneten Lager 29 abgestützt. Dieses Lager 29 hat die Aufgabe, die Abstützanordung 5 in radialer Richtung drehfest am Arbeitsorgan 1 abzustützen und die axiale Hubbewegung des Arbeitsorgans 1 auf die Abstützanordung 5 zu übertragen. Dadurch, dass nur die translatorischen Bewegungen des Arbeitsorgans 1, nicht jedoch dessen Drehbewegung, auf die Abstützanordung 5 übertragen werden, können unterschiedliche, auf das jeweilige Anfoderungsprofil zugeschnittene Dichtungen eingesetzt werden.

Um die Abstützanordnung 5 gegen Verdrehen zu sichern, ist eine mit einem Kraftaufnahmelement in Form einer Schraube 32 vorgesehene Verdrehsicherung 31 vorgesehen, welche kraftschlüssig mit der Abstützanordnung 5 verbunden und über ein Lager 33 am Gehäuse 2 abgestützt ist. Zur Aufnahme der Hubbwewegung ist ein in eine Führung 34 eingelassener Schlitz 35 vorgesehen.

Als zweites Dichtmittel ist eine ringförmige Membran 24 vorgesehen, welche mittels des Spannrings 10 an der Abstützanordnung 5 befestigt ist. Zum Befestigen der Membran 24 am Gehäuse sind mit Klemmelementen 26 versehene Schrauben 27 vorgesehen. Die an der Stirnseite der Abstützanordnung 5 fixierte Membran 24 besteht vorzugsweise aus einem faserverstärkten Gummi bzw. Kunststoff. Das an die Membran 24 angrenzende Ringelement 7 ist auf der der Membran 24 zugewandten Stirnseite derart schräg ausgebildet, dass die Membran 24 am vordersten Punkt der nach links zum Arbeitsraum 3 gerichteten Bewegung in etwa parallel zu der schrägen Stirnseite verläuft. Durch diese Anordnung dichtet die Membran 24 die Abstützanordnung 5 auf der Rückseite gegenüber dem Arbeitsorgan 1, und damit gegenüber den zu verarbeitenden Materialien, vollständig ab. Um zu verhindem, dass im Bereich der Membran 24 durch die zu verarbeitenden Materialien ein Überdruck entsteht, durch welchen die Membran 24 in ihrer Bewegungsfreiheit eingeschränkt würde, ist ein sich konisch nach vorne zum Arbeitsraum 3 hin verjüngendes Zwischenelement 28 vorgesehen. Der kleinste innendurchmesser dieses Zwischenelements 28 entspricht vorzugsweise dem Innendurchmesser des Arbeitsraums 3. Die Membran 24 weist auf der dem Produktraum zugewandten Seite 3 eine verschleissschutzbildende Oberfläche auf, welche beispielsweise durch das Einvulkanisieren einer Gewebeschicht aus Kunststoff oder Metall erzeugt werden kann. Durch das Vorsehen einer derartigen Memranoberfläche, können auch abrasiv wirkende Materialien verarbeitet werden.

Um die Abriebfestigkeit des Arbeitsorgans 1 im Bereich der Abstützanordnung 5 bzw. der ersten Dichtmittel 16 zu erhöhen, ist das Arbeitsorgan 1 mit einer im wesentlichen rohrförmig ausgestalteten Ummantelung 30 versehen, deren Oberfläche auf die spezifischen Anforderungen abgestimmt ist.

Somit kann festgehalten werden, dass durch die vorgängig beschriebene Ausgestaltung der Dichtungsanordnung 4, bei der eine zwischen dem Gehäuse 2 und dem Arbeitsorgan 1 angeordnete Abstützanordnung 5 vorgesehen ist, welche drehfest angeordnet jedoch translatorisch mit dem Arbeitsorgan 1 gekoppelt ist, können die eingesetzten Dichtungen 16, 24 optimal an ihre Aufgabe angepasst werden. Die erste, zwischen dem Arbeitsorgan 1 und der Abstützanordnung 5 angeordnete Dichtung 16 dichtet das Arbeitsorgan 1 in Bezug auf die Drehbewegung ab, währenddem die zweite, zwischen der Abstützanordnung 5 und dem Gehäuse 2 angeordnete Dichtung 24 das Arbeitsorgan 1 in Bezug auf seine Hubbewegung abdichtet.

Anzufügen bleibt, dass das vorgängige Ausführungsbeispiel keinesfalls abschliessenden Charakter aufweisen soll, sondern dass im Rahmen des in den Patentansprüchen definierten Schutzumfangs durchaus von vorgängigem Ausführungsbeispiel abweichende Misch- und Knetmaschinen bzw. Dichtungsanordnungen ausgeführt werden können.

## Patentansprüche

1. Misch- und Knetmaschine, mit einem in einem Gehäuse (2) rotierenden und sich translatorisch bewegenden Arbeitsorgan (1) zum Mischen und Kneten von in einem Arbeitsraum (3) aufgenommenen Materialien, wobei eine Dichtungsanordnung (4) zwischen dem Arbeitsorgan (1) und dem Gehäuse (2) vorgesehen ist, welche Dichtungsanordnung (4) eine zwischen dem Gehäuse (2) und dem Arbeitsorgan (1) angeordnete Abstützanordnung (5) zur Aufnahme von ersten und zweiten Dichtmitteln (16, 24) umfasst, wobei die Abstützanordnung (5) translatorisch mit dem Arbeitsorgan (1) gekoppelt jedoch mittels einer separaten Verdrehsicherung (31) drehfest am Gehäuse abgestützt ist, welche Verdrehsicherung (31) derart ausgebildet ist, dass das Arbeitsorgan (1) translatorisch frei bewegbar ist, und wobei die ersten Dichtmittel (16) zum rotativen Abdichten des Arbeitsorgans (1) zwischen dem Arbeitsorgan (1) und der Abstützanordnung (5) angeordnet sind und wobei die zweiten Dichtmittel (24) zum translativen Abdichten des Arbeitsorgans (1) zwischen der Abstützanordnung (5) und dem Gehäuse (2) angeordnet sind.

2. Misch- und Knetmaschine nach Anspruch 1, wobei zwischen der Dichtungsanordnung (4) und dem Arbeitsraum (3) ein sich konisch zum Arbeitsraum (3) hin verjüngendes Zwischenelement (28) vorgesehen ist.

3. Misch- und Knetmaschine nach Anspruch 1 oder 2, wobei die Abstützanordnung (5) eine rohrförmige, das Arbeitsorgan (1) umfassenden Hülse (6) aufweist, auf deren Innenseite die ersten Dichtmittel (16) angeordnet sind.

4. Misch- und Knetmaschine nach einem der vorhergehenden Ansprüche, wobei die Hülse (6) im einen Endbereich mit einem radial nach innen vorstehenden Anschlagbund (12) und im anderen Endbereich mit einem Innengewinde (13) versehen ist und die Abstützanordnung (4) eine mit einem Aussengewinde (14) versehene Spannbüchse (8) umfasst, welche mit dem Innengewinde (13) der Hülse (6) korrespondiert, so dass die ersten Dichtmittel (16) mittels der Spannbüchse (8) zwischen dem Anschlagbund (12) der Hülse (6) und der Stirnseite der Spannbüchse (8) fixierbar sind.

5. Misch- und Knetmaschine nach Anspruch 4, wobei sich der Innendurchmesser der Spannbüchse (8) von der den Dichtmitteln (16) zugewandten Stirnseite nach hinten konisch vergrössert.

6. Misch- und Knetmaschine nach einem der vorhergehenden Ansprüche, wobei die Abstützanordnung (5) einen Lagerring (18) umfasst, dessen Innendurchmesser zumindest annähernd dem Aussendurchmesser des korrespondierenden Abschnitts des Arbeitsorgans (1) entspricht.

7. Misch- und Knetmaschine nach Anspruch 6, wobei der Lagerring (18) zwischen den ersten Dichtmitteln (17) und der Stirnseite der Spannbüchse (8) angeordnet ist.

8. Misch- und Knetmaschine nach einem der vorhergehenden Ansprüche, wobei die Abstützanordnung (5) im weiteren einen Stützring (9) umfasst, welcher mittels eines Lagers (29) translatorisch mit dem Arbeitsorgan (1) gekoppelt ist.

9. Misch- und Knetmaschine nach Anspruch 8, wobei das Lager (29) im einen Endbereich der Abstützanordnung (5) angeordnet ist, und dass die zweiten Dichtmittel (24) in dem anderen, dem Lager (29) gegenüberliegenden Endbereich an der Abstützanordnung (5) angeordnet sind.

10. Misch- und Knetmaschine nach Anspruch 8 oder 9, wobei der Stützring (9) mit zumindest einer Gewindebohrung (20) und die Spannbüchse (8) mit mehreren länglichen Ausnehmungen (22) versehen ist, welche in der axialen Lage mit der Gewindebohrung (20) korrespondieren, wobei in die Gewindebohrung (20) einschraubbare Schraubmittel (21) vorgesehen sind, mittels welchen die Spannbüchse (8) gegen Verdrehen sicherbar ist.

11. Misch- und Knetmaschine nach einem der vorhergehenden Ansprüche, wobei die zweiten Dichtmittel durch zumindest eine Membran (24) gebildet werden.

12. Misch- und Knetmaschine nach Anspruch 11, wobei die Membran (24) auf der dem Produktraum zugewandten Seite (3) eine verschleissschutzbildende Oberfläche aufweist.

13. Misch- und Knetmaschine nach Anspruch 11 oder 12, wobei die Membran (24) an der Stirnseite der Abstützanordnung (5) fixiert ist.

14. Misch- und Knetmaschine nach Anspruch 13, wobei die der Membran (24) zugewandte Stirnseite der Abstützanordnung (5) schräg ausgebildet ist.

15. Misch- und Knetmaschine nach einem der Ansprüche 11 bis 14, wobei die Membran (24) mittels eines Spannrings (10) an der Stirnseite der Hülse (6) fixierbar ist.

16. Misch- und Knetmaschine nach einem der vorhergehenden Ansprüche, wobei Mittel (32, 33, 34, 35) zur Verdrehsicherung der Abstützanordnung (5) vorgesehen sind.

17. Misch- und Knetmaschine nach Anspruch 16, wobei die Mittel ein Kraftaufnahmelement (32) umfassen, welches kraftschlüssig mit der Abstützanordnung (5) verbunden und über ein Lager (33) am Gehäuse (2) abgestützt ist.

18. Misch- und Knetmaschine nach einem der vorhergehenden Ansprüche, wobei das Arbeitsorgan (1) im Bereich der Abstützanordnung (5) mit einer im wesentlichen rohrförmig ausgestalteten Ummantelung (30) versehen ist, welche eine abriebfeste Oberfläche aufweist.

## Claims

1. Mixing and kneading machine, with an operating element (1), rotating and moving in a translatory manner in a housing (2), for mixing and kneading materials received in an operating space (3), a sealing arrangement (4) being provided between the operating element (1) and the housing (2), which sealing arrangement (4) comprises a supporting arrangement (5), arranged between the housing (2) and the operating element (1), for receiving first and second sealing means (16, 24), the supporting arrangement (5) being coupled in a translatory manner to the operating element (1) but supported in a rotationally fixed manner on the housing by means of a separate twisting preventer (31), which twisting preventer (31) is formed in such a way that the operating element (1) is freely movable in a translatory manner, and the first sealing means (16), for the rotational sealing of the operating element (1), being arranged between the operating element (1) and the supporting arrangement (5) and the second sealing means (24), for the translatory sealing of the operating element (1), being arranged between the supporting arrangement (5) and the housing (2).

2. Mixing and kneading machine according to Claim 1, an intermediate element (28) tapering conically towards the operating space (3) being provided between the sealing arrangement (4) and the operating space (3).

3. Mixing and kneading machine according to Claim 1 or 2, the supporting arrangement (5) having a tubular sleeve (6), which encloses the operating element (1) and on the inner side of which the first sealing means (16) are arranged.

4. Mixing and kneading machine according to one of the preceding claims, the sleeve (6) being provided in one end region with a radially inwardly projecting stop collar (12) and in the other end region with an internal thread (13), and the supporting arrangement (5) comprising a clamping bush (8), which is provided with an external thread (14) and corresponds to the internal thread (13) of the sleeve (6), so that the first sealing means (16) can be fixed by means of the clamping bush (8) between the stop collar (12) of the sleeve (6) and the end face of the clamping bush (8).

5. Mixing and kneading machine according to Claim 4, the inside diameter of the clamping bush (8) increasing conically rearwards from the end face facing the sealing means (16).

6. Mixing and kneading machine according to one of the preceding claims, the supporting arrangement (5) comprising a bearing ring (18), the inside diameter of which corresponds at least approximately to the outside diameter of the corresponding portion of the operating element (1).

7. Mixing and kneading machine according to Claim 6, the bearing ring (18) being arranged between the first sealing means (17) and the end face of the clamping bush (8).

8. Mixing and kneading machine according to one of the preceding claims, the supporting arrangement (5) further comprising a supporting ring (9), which is coupled in a translatory manner to the operating element (1) by means of a bearing (29).

9. Mixing and kneading machine according to Claim 8, the bearing (29) being arranged in one end region of the supporting arrangement (5), and the second sealing means (24) being arranged in the other end region, lying opposite the bearing (29), on the supporting arrangement (5).

10. Mixing and kneading machine according to Claim 8 or 9, the supporting ring (9) being provided with at least one threaded bore (20) and the clamping bush (8) being provided with a number of elongated recesses (22), which correspond in the axial position to the threaded bore (20), screwing means (21) which can be screwed into the threaded bore (20) being provided, allowing the clamping bush (8) to be secured against twisting.

11. Mixing and kneading machine according to one of the preceding claims, the second sealing means being formed by at least one membrane (24).

12. Mixing and kneading machine according to Claim 11, the membrane (24) having on the side (3) facing the product space a surface providing protection against wear.

13. Mixing and kneading machine according to Claim 11 or 12, the membrane (24) being fixed on the end face of the supporting arrangement (5).

14. Mixing and kneading machine according to Claim 13, the end face of the supporting arrangement (5) facing the membrane (24) being obliquely formed.

15. Mixing and kneading machine according to one of Claims 11 to 14, the membrane (24) being fixable on the end face of the sleeve (6) by means of a clamping ring (10).

16. Mixing and kneading machine according to one of the preceding claims, means (32, 33, 34, 35) being provided for preventing the supporting arrangement (5) from twisting.

17. Mixing and kneading machine according to Claim 16, the means comprising a force-absorbing element (32), which is non-positively connected to the supporting arrangement (5) and is supported on the housing (2) by means of a bearing (33).

18. Mixing and kneading machine according to one of the preceding claims, the operating element (1) being provided in the region of the supporting arrangement (5) with a casing (30) of a substantially tubular form which has an abrasion-resistant surface.

## Revendications

1. Machine à mélanger et malaxer, comprenant un organe de travail (1) qui, dans un boîtier (2), tourne et se déplace en translation et qui sert à mélanger et malaxer des matières reçues dans une chambre de travail (3), un agencement d'étanchéité (4) étant prévu entre l'organe de travail (1) et le boîtier (2), lequel agencement d'étanchéité (4) comprend un agencement d'appui (5) qui est disposé entre le boîtier (2) et l'organe de travail (1) et qui sert à loger des premiers et des seconds moyens d'étanchéité (16, 24), l'agencement d'appui (5) étant couplé en translation à l'organe de travail (1), mais en étant en appui calé en rotation sur le boîtier au moyen d'une sécurité anti-rotation (31), laquelle sécurité anti-rotation (31) est réalisée d'une manière telle que l'organe de travail (1) peut être déplacé librement en translation, tandis que les premiers moyens d'étanchéité (16) sont disposés, en vue de l'étanchéité en rotation de l'organe de travail (1), entre l'organe de travail (1) et l'agencement d'appui (5) et que les seconds moyens d'étanchéité (24) sont disposés, en vue de l'étanchéité en translation de l'organe de travail (1), entre l'agencement d'appui (5) et le boîtier (2).

2. Machine à mélanger et malaxer suivant la revendication 1, dans laquelle un élément intermédiaire (28) qui va en rétrécissant d'une manière conique vers la chambre de travail (3) est prévu entre l'agencement d'étanchéité (4) et la chambre de travail (3).

3. Machine à mélanger et malaxer suivant la revendication 1 ou 2, dans laquelle l'agencement d'appui (5) comprend un manchon (6) tubulaire qui entoure l'organe de travail (1) et sur la face intérieure duquel les premiers moyens d'étanchéité (16) sont disposés.

4. Machine à mélanger et malaxer suivant l'une des revendications précédentes, dans laquelle le manchon (6) est pourvu, dans une première zone d'extrémité, d'un collet de butée (12) faisant saillie radialement vers l'intérieur et, dans l'autre zone d'extrémité, d'un filetage intérieur (13) et l'agencement d'appui (4) comprend une douille de serrage (8) qui est pourvue d'un filetage extérieur (14) et qui correspond au filetage intérieur (13 du manchon (6), de sorte que les premiers moyens d'étanchéité (16) peuvent être immobilisés au moyen de la douille de serrage (8) entre le collet de butée (12) du manchon (6) et la face frontale de la douille de serrage (8).

5. Machine à mélanger et malaxer suivant la revendication 4, dans laquelle le diamètre intérieur de la douille de serrage (8) s'agrandit d'une manière conique en allant de la face frontale tournée vers les moyens d'étanchéité (16) vers l'arrière.

6. Machine à mélanger et malaxer suivant l'une des revendications précédentes, dans laquelle l'agencement d'appui (5) comprend un anneau d'appui (18) dont le diamètre intérieur correspond au moins approximativement au diamètre extérieur du segment correspondant de l'organe de travail (1).

7. Machine à mélanger et malaxer suivant la revendication 6, dans laquelle l'anneau d'appui (18) est disposé entre les premiers moyens d'étanchéité (17) et la face frontale de la douille de serrage (8).

8. Machina à mélanger et malaxer suivant l'une des revendications précédentes, dans laquelle l'agencement d'appui (5) comprend en outre une bague d'appui (9) qui est couplée en translation avec l'organe de travail (1) au moyen d'un roulement (29).

9. Machine à mélanger et malaxer suivant la revendication 8, dans laquelle le roulement (29) est disposé dans une zone d'extrémité de l'agencement d'appui (5) et en ce que les seconds moyens d'étanchéité (24) sont disposés sur l'agencement d'appui (5) dans l'autre zone d'extrémité située à l'opposé du roulement (29).

10. Machine à mélanger et malaxer suivant la revendication 8 ou 9, dans laquelle la bague d'appui (9) est pourvue d'au moins un trou fileté (20) et la douille de serrage (8) est pourvue de plusieurs évidements (22) longitudinaux qui correspondent en position axiale au trou fileté (20), tandis qu'il est prévu des moyens de vissage (21) qui peuvent être vissés dans le trou fileté (20) et au moyen desquels la douille de serrage (8) peut être bloquée en rotation.

11. Machine à mélanger et malaxer suivant l'une des revendications précédentes, dans laquelle les seconds moyens d'étanchéité sont constitués par au moins une membrane (24).

12. Machine à mélanger et malaxer suivant la revendication 11, dans laquelle la membrane (24) présente, sur la face (3) tournée vers la chambre de produit, une surface constituant une protection vis-à-vis de l'usure.

13. Machine à mélanger et malaxer suivant la revendication 11 ou 12, dans laquelle la membrane (24) est fixée sur la face frontale de l'agencement d'appui (5).

14. Machine à mélanger et malaxer suivant la revendication 13, dans laquelle la face frontale de l'agencement d'appui (5) tournée vers la membrane (24) est réalisée d'une manière inclinée.

15. Machine à mélanger et malaxer suivant l'une des revendications 11 à 14, dans laquelle la membrane (24) peut être fixée sur la face frontale du manchon (6) au moyen d'un anneau de serrage (10).

16. Machine à mélanger et malaxer suivant l'une des revendications précédentes, dans laquelle il est prévu des moyens (32, 33, 34, 35) servant au blocage anti-rotation de l'agencement d'appui (5).

17. Machine à mélanger et malaxer suivant la revendication 16, dans laquelle les moyens comprennent un élément de réception de force (32) qui est relié par application de force à l'agencement d'appui (5) et prend appui sur le boîtier (2) par l'intermédiaire d'un roulement (33).

18. Machine à mélanger et malaxer suivant l'une des revendications précédentes, dans laquelle l'organe de travail (1) est pourvu, dans la zone de l'agencement d'appui (5), d'une enveloppe (*30) qui est réalisée d'une manière essentiellement tubulaire et qui présente une surface résistant à l'abrasion.
